# EUROPEAN PATENT SPECIFICATION

(11) **EP 2 189 575 B1**
(45) Date of publication and mention of the grant of the patent: **30.06.2021**
(21) Application number: 08169404.4
(22) Date of filing: 19.11.2008
(51) Int. Cl.: E02B 17/00, B66C 17/06, B66C 23/18, B66C 23/52, B66C 23/74, F03D 13/10

(54) **Jack-up offshore platform and a method thereof**
Jack-Up Offshore-Plattform und Verfahren
Offshore plate-forme auto-élévatrice et procédé

(43) Date of publication of application: 26.05.2010
(73) Proprietor: DEME Offshore BE N.V., 2070 Zwijndrecht (BE)
(72) Inventor: VANDENBULCKE, Luc, 2000 Antwerpen (BE); VANDERBEKE, Koen, 3071 Erps-Kwerps (BE)
(74) Representative: Brouwer, Hendrik Rogier

(56) References cited:
- EP-A1- 1 000 897
- EP-A1- 1 748 022
- WO-A2-2007/030015
- DE-A1- 19 931 301
- GB-A- 763 864
- GB-A- 857 961
- US-A- 4 012 917
- US-A- 4 652 177
- US-A- 4 664 269
- US-A1- 2002 079 278
- US-A1- 2008 247 827

## Description

The invention relates to a jack-up offshore platform, on which is provided a lifting crane for lifting a load, which lifting crane comprises counterbalancing means for counterbalancing the load. The invention also relates to a method of repositioning a load from a jack-up offshore platform and to a use of such jack-up offshore platform.

There is an increasing amount of large structures at sea that have to be serviced and repaired. A typical offshore wind turbine for instance comprises a nacelle supported by a tower of more than 100 meters high above sea level. A hub is connected to the nacelle for holding rotor blades, which can have a length of 70 meters and more. The nacelle alone typically accounts for 350 tons in weight. When assembling, servicing or repairing such large structures at sea, parts of the structure are generally transported to a jack-up offshore platform close to the structure, on which platform is provided a lifting crane for lifting the parts. The known platform comprises a lifting crane provided with a counterweight for counterbalancing the weight of the lifted parts. As structures become higher and larger, the required lifting cranes and counterweights become increasingly heavy, which consequentially also requires sturdier platforms. The counterweights moreover tend to take up more and more workspace from the jack-up offshore platform. Transporting large cranes and counterweights is also increasingly demanding and costly.

US 4,012,917 A discloses an oil drilling platform supported by prepositioned template legs, the distances between the upper ends of which are spanned by bridge beams of open framework construction. The bridge beams act in supporting the platform when it is raised above water level, and further define a grid like array of drilling locations. The platform comprises a crane of known construction.

GB 857 961 A discloses a jack-up platform provided with a crane.

US 2002/0079278 A1 discloses a jack-up platform provided with a lifting crane. The lifting crane is supported by a jack-house integrated in the work deck of the platform. The jack-house is reinforced to allow the placement of a crane tub provided with a flange for the rotatable engagement of the crane upon the flange. The crane disclosed is provided with the usual counterweights to balance loads.

GB 763 864 A discloses a jack-up platform provided with a lifting crane and a derrick structure to support heavy loads.

US 4,652,177 A discloses a jack-up off-shore platform comprising a lifting crane that is rotatably mounted about the guide tower of a leg of the off-shore platform in order to save space.

US 2008/0247827 A finally discloses a crane support for the crane of a jack-up platform. The crane-support allows movement along tracks provided on the work deck of the platform.

WO 2007/030015 A2 discloses a tie-back system for cranes. In the system, tie back rods are connected to pad eyes, that are fixed to the platform.

US 4,664,269A discloses an offshore crane for heavy loads. Luffing wires of the crane are disconnected from the crane and extended by guy wires that are attached to a work deck of a pontoon.

It is an object of the invention to provide a more effective jack-up offshore platform for assembling or servicing large and high structures at sea. It is a further object to provide a method of repositioning a load as well as a use of such jack-up offshore platform.

According to the invention, this object is achieved by a jack-up offshore platform in accordance with claim 1. On the jack-up platform is provided a lifting crane for lifting a load, which lifting crane comprises counterbalancing means for counterbalancing the load, whereby the counterbalancing means are connected to the jack-up offshore platform. When lifting a load, the counterbalancing means are connected to the jack-up platform. As a result, at least a part of the force carried by the counterbalancing means is transferred to the jack-up offshore platform, and the counterweight needed to counterbalance the load can be reduced compared to the state of the art, or even deleted altogether. Alternatively, a larger load can be lifted relative to the state of the art platform and crane.

An additional advantage of the jack-up offshore platform according to the invention is that its lifting crane takes up less space of the jack-up offshore platform and makes assembling or servicing structures at sea less expensive and easier to perform. Providing counterbalancing means that are, in operation, connected to the jack-up offshore platform has not been attempted before since lifting cranes usually move, in particular rotate, when repositioning a load. Connected counterbalancing means may limit the movement of the lifting crane. The advantages provided by a decreased counterweight and increased workspace are such however that a more effective jack-up offshore platform is achieved by the invention. With a more effective platform is meant a platform that is able to operate faster, easier and at reduced cost.

According to the invention, the counterbalancing means comprise at least one counterbalancing cable attached to the lifting crane and connected to the platform. When lifting a load, the at least one counterbalancing cable transfers the counterbalancing forces into the jack-up offshore platform. As a result, strong counterbalancing means are obtained, which take up minimal workspace.

The counterbalancing means are connected to the platform by first connection means provided on the cable, and second connection means provided on the jack-up offshore platform. The first and second connection means cooperate to achieve the connection. This embodiment allows for easy connecting and disconnecting of the counterbalancing cable to and from the jack-up offshore platform.

According to one possible structure not covered by the present invention, the counterbalancing means may be connected to the jack-up offshore platform at at least two spaced apart connection positions. This allows to use the lifting crane in at least two different positions. For example, with the lifting crane in a first position, a load can be lifted from a cargo ship onto a particular location of the platform, and, with the lifting crane in a second position, the load can be repositioned to the structure at sea. In a simple, yet adequate embodiment, the counterbalancing means are connected to the platform at two spaced apart connection positions. When servicing or assembling a structure at sea, such as a wind turbine, the lifting crane usually lifts parts from a first location, for example from a cargo ship or from the jack-up offshore platform, and positions the load at the preferred location of the structure. When these locations are at a substantial distance from each other, two spaced apart connection positions allow for effective use of the counterbalancing cables, whereas even more limited workspace of the jack-up offshore platform is used.

The second connection means can be located at any position of choice of the jack-up offshore platform. The counterbalancing means may be connected to the platform nearby edges of the jack-up offshore platform. This saves even more workspace, as edges are usually not part of the workspace, or at least not used extensively.

However, according to the present invention, the counterbalancing means are movably connected to the jack-up offshore platform. To establish such a movable connection between the counterbalancing means and the platform, the jack-up offshore platform comprise a guide, such as a cable-guide or a bar-guide, fixed to the platform. The first connection means may for instance be provided in the form of a hook that is connected to the cable-guide or bar-guide and will slide along the cable-guide or bar-guide when moving the lifting crane. A person skilled in the art may envisage other solutions to such a movable connection. The present invention does not demand or demands less connecting and disconnecting of the counterbalancing means during the use of the lifting crane. When moving the lifting crane, the connection between the counterbalancing means and the jack-up offshore platform can move relative to the platform, whereby the counterbalancing means can be used over a wider range of positions of the lifting crane. In case the counterbalancing means comprise a counterbalancing cable, it is also possible to provide a connection that is able to vary the length of the counterbalancing cable, or that is movable in the direction of the counterbalancing cable. This allows to accommodate movements of the lifting crane and/or to vary the stress in the cable according to the needs.

Although the off-shore jack-up platform, and in particular the lifting crane according to the invention does not need a counterweight, a preferred embodiment of the lifting crane comprises, in addition to the counterbalancing means, a counterweight, supported by the lifting crane. Such a lifting crane is able to move and rotate in its unconnected state (when it is not connected to the platform) in a number of stable configurations, eventually carrying a relatively small load. The counterweight of the present embodiment will typically be smaller than the counterweight of the known lifting crane, and therefore still saves weight and workspace. Preferably, the distance between the counterweight and the lifted load is adjustable. This results in a more flexible lifting crane, as the counterbalancing couple exerted by the counterweight about lifted load can be adjusted, resulting in easy repositioning of loads.

The lifting crane of the jack-up platform according to the invention preferably comprises at least one sensor for detecting forces, and control means for counterbalancing the load such that the lifting crane remains in equilibrium on the basis of the outcome of the detected forces. The detected forces for a certain load can be influenced by changing the position of the lifting crane and/or by tightening or loosening the counteracting cable, and/or eventually also by tightening or loosening other cables provided between different parts of the lifting crane. The sensors and control means may also be used to find an equilibrium position of the crane in which the force in the counterbalancing means is about zero. If the detected force in the counterbalancing cable for instance is below a predetermined low value, the counterbalancing cable may be disconnected from the platform without the crane loosing its equilibrium. This allows to safely reposition the lifting crane to another position. On the other hand, the sensors and control means may also be used to limit the stress in the counteracting cable to below a certain yield stress, in order to prevent fracture of the cable. The control means may also provide a signal, for example a sound or a light signal, to inform the user when a certain predetermined stress level is exceeded.

The lifting crane of the jack-up platform according to the invention is able to lift loads higher than the known platform lifting crane. The lifting crane of the jack-up platform is particularly useful for lifting loads to a height between 50 and 150 meter, preferably between 60 and 130 meter and most preferably between 70 and 110 meter above the jack-up offshore platform. A jack-up offshore platform on which is provided such a lifting crane is particularly advantageous, as counterbalancing forces may be high. The lifting capacity of the lifting crane according to the invention may easily be enlarged, for instance by increasing the thickness of the counterbalancing cables and/or the number thereof. More or larger counteracting cables are still easier to transport, lighter and take up less workspace than when using more or larger counterweights, as is done in the state of the art.

The lifting crane according to the invention comprises a first boom, movably supported by the jack-up offshore platform at its lower end, and may, in an embodiment, further comprise a third boom, hingedly connected to the first boom, for holding the load. This allows for a more flexible lifting crane, as loads can be lifted higher, without a longer first boom. As a result, transport of the lifting crane with higher capacity in terms of height to and from the platform is still easy to perform.

According to the invention, the lifting crane comprises a first boom, movably supported by the jack-up offshore platform at its lower end, and a second boom, provided to space apart the counterbalancing cable and the first boom. Connecting the counterbalancing cable indirectly to the first boom by a second boom enlarges the effective arm of the counterbalancing force and thereby the couple exerted about the first boom. As a result, higher loads can be lifted and/or the at least one counterbalancing cable as well as the first and second connection means can be designed more lightweight, which results in cheaper transport of the lifting crane.

The jack-up offshore platform according to the invention allows for supporting a lifting crane without a counterweight, and thus can be designed smaller or may provide an increased workspace of the jack-up offshore platform.

The invention also relates to a method of repositioning a load from a jack-up offshore platform by a lifting crane in accordance with claim 8. The advantages of the method have already been elucidated in the context of describing the jack-up offshore platform above, and will not be repeated here.

The invention finally relates to the use of a jack-up offshore platform according to the invention for assembling and servicing structures at sea. Especially when transport of a lifting crane is needed the invention is advantageous, as no or at least a smaller counterweight is needed. In particular assembling high structures, such as wind turbines, and/or heavy structures can be performed more easily with the jack-up offshore platform according to the invention.

The invention will now be explained in more detail with reference to the drawings, without however being limited thereto and wherein:
Fig. 1 shows a jack-up offshore platform as such according to the invention in side view, thereby not disclosing the present invention comprising a movable connection in form of a counterbalancing cable and a guide fixed to the platform; and
Fig. 2 shows a schematic top view of another embodiment of a jack-up offshore platform according to the invention. In particular, fig. 2 shows the movable connection having the guide fixed to the platform in accordance with the present invention.

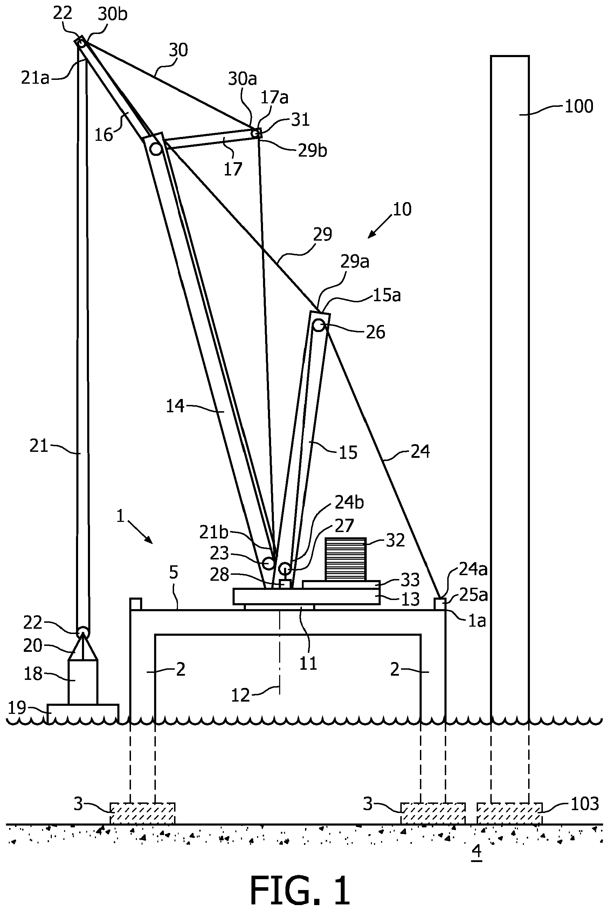

Referring to figure 1, a jack-up offshore platform 1 according to the invention is shown, located at sea nearby a semi-finished wind turbine 100, which is fixed by foundations 103 to a base 4. The jack-up offshore platform comprises supports 2, fixed by foundations 3 to the base 4, and a work deck 5. A lifting crane 10 is positioned on the work deck 5. The lifting crane 10 comprises a support 11, which allows for rotation of the lifting crane 10 relative to the jack-up offshore platform 1 about a vertical axis 12.

The lifting crane furthermore comprises a frame 13. The frame 13 hingedly supports a first boom 14 and a second boom 15. A third boom 16 and a fourth boom 17 are hingedly supported nearby the top 14a of the first boom 14. A load 18, supported by a cargo ship 19, is connected to holding means 20 of the lifting crane 10. A lifting cable 21 is at a first end 21a connected to the third boom 16, guided over pulleys 22 and connected to a winch 23 at a second end 21b. The winch 23 is connected to the first boom 14 by a force sensor, which is not shown.
A counterbalancing cable 24 is at its first end 24a connected to a first bar guide 25a, which first bar guide 25a is rigidly fixed to the jack-up offshore platform 1, nearby an edge 1a of the jack-up offshore platform 1. The cable 24 is guided over a pulley 26, fixed to the top 15a of the second boom 15 and connected to a winch 27 at a second end 24b. The winch 27 is connected to a force sensor 28, which force sensor is fixed to the frame 13 of the lifting crane 10. A first control cable 29 is at its first end 29a connected to the second boom 15 by a winch, which is not shown, nearby the pulley 26. At a second end 29b the first control cable 29 is fixed to an end 17a of the fourth boom 17. A second control cable 30 is at its first end 30a connected to the end 17a of the fourth boom 17 by a winch 31. At a second end 30b the cable 30 is fixed to an end 16b of the third boom 16. In addition, the lifting crane 10 comprises a counterweight 32, which is movably connected to the frame 13 by a support 33. The support 33 allows displacement the counterweight 32 closer to and further away from the lower end 14b of the first boom 14. Preferably, the force sensor 28 is connected to a control system, which controls at least the winches 23, 27, 31 as a result of the level of the detected force.

When lifting the load 18, the load will exert a couple about a lower end 14b of the first boom 14b. Both the counterbalancing cable 24 in cooperation with the first control cable 29, as well as the counterweight 32 will exert a counterbalancing couple about the lower end 14b of the first boom 14. As a result the first boom 14 is in moment equilibrium. If the first boom 14 and the third boom 16 are oriented with higher inclination, the couple exerted about the lower end 14b of the first boom 14 will decrease. As a result the counterbalancing force in the counterbalancing cable 24 and the first control cable 29 will decrease, and, if the inclination of the first boom 14 and the third boom 16 increase sufficiently, the counterbalancing cable 24 and/or the first control cable 29 may even become slack, as the counterweight 32 is able to counterbalance the decreased couple exerted by the lifted load 18 about the lower end 14a of the first boom 14. The counterbalancing cable 24 may or may not now be disconnected from the first bar guide 25a. With the first boom 14 and the third boom 16 in the inclined orientation, the lifting crane 10 may be rotated about the axis 12, e.g. by 180°. After connecting the counterbalancing cable 24 to a second bar guide 25b, the third boom 16 and/or the first boom 14 may be lowered to position the load 18, e.g. a nacelle, on the semi-finished wind turbine 100. During lowering the third boom 16 and/or the first boom 14 the counterbalancing force in the counterbalancing cable 24 and the first control cable 29 will increase.

In another embodiment, the first boom 14 of the lifting crane 10 does not comprise a third boom 16 or a fourth boom 17. In that case, the first control cable 29 is connected to the top 14a of the first 14 at its first end 29a.

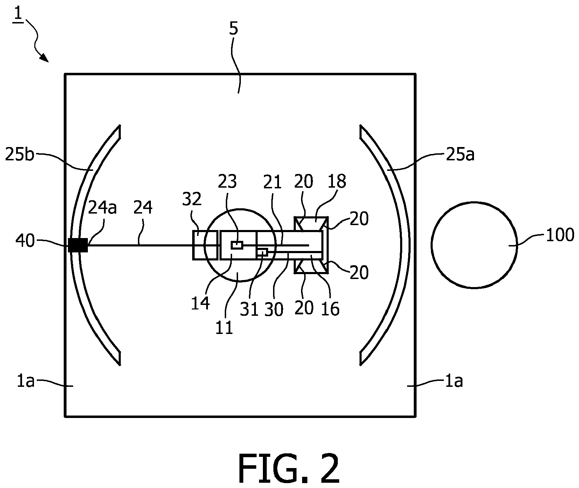

Now referring to figure 2, a top view on the jack-up offshore platform 1 according to the invention is shown. The counterbalancing cable 24 is connected to the second bar-guide 25b at its first end 24a by a hook 40. The first boom 14 as well as the third boom 16 is in an almost upright position, wherein the load 18 is counterbalanced by the counterweight 32. As the counterbalancing cable 24 is connected to the second bar-guide 25b, both the first boom 14 as well as the third boom 16 may be lowered, wherein during lowering counterbalancing force in the counterbalancing cable 24 will increase. Rotation of the lifting crane 10 about the axis 12, see also figure 1, without the need of disconnecting and connecting the counterbalancing cable 24, is made possible, as the curved second bar-guide 25b allows for sliding of the hook 40, depending on the orientation of the lifting crane 10.

The invention is not limited to the embodiments shown in figures 1 and 2, and many variations of the design of the lifting crane 10, the fixation of the cables etcetera are possible within the scope of the claims attached hereto.

## Claims

1. A jack-up offshore platform (1), comprising a lifting crane (10) having a first boom (14) movably supported by the jack-up offshore platform (1) at its lower end for lifting a load (18), which lifting crane (10) comprises counterbalancing means (24, 26, 29, 30) for counterbalancing the weight of the load (18) to be lifted by the first boom (14) of the lifting crane (10) and provide the first boom (14) in moment equilibrium, the counterbalancing means (24, 26, 29, 30) comprising at least one counterbalancing cable (24) attached to the lifting crane (10) and connected to the platform (1), the lifting crane (10) further comprising a second boom (15), provided to keep the counterbalancing cable (24) at a distance from the first boom (14), wherein the connection of the counterbalancing cable (24) to the jack-up offshore platform (1) is movable relative to the jack-up offshore platform (1) and comprises first connection means provided on the counterbalancing cable (24), and second connection means provided on the jack-up offshore platform (1), wherein the second connection means comprise a guide fixed to the platform (1).

2. A jack-up offshore platform according to claim 1, wherein the movable connection of the counterbalancing cable (24) to the platform (1) comprises the guide fixed to the platform work deck (5) and adapted to slidably cooperate with the first connection means provided on the cable.

3. A jack-up offshore platform according to claim 2, wherein the guide comprises a curved bar guide.

4. A jack-up offshore platform according to any of the preceding claims, **characterized in that** the lifting crane (10) in addition to the counterbalancing cable (24) comprises a counterweight (32), supported by the lifting crane (10).

5. A jack-up offshore platform according to any of the preceding claims, **characterized in that** the lifting crane (10) comprises at least one sensor for detecting forces and control means for counterbalancing the load by rotating the fist boom (14) such that the lifting crane (10) remains in equilibrium, on the basis of the outcome of the detected forces.

6. A jack-up offshore platform according to any of the preceding claims, **characterized in that** the lifting crane (10) is suitable for lifting loads to a height between 50 and 150 meter, preferably between 60 and 130 meter and most preferably between 70 and 110 meter above the jack-up offshore platform (1).

7. A jack-up offshore platform according to any of the preceding claims, **characterized in that** the lifting crane (10) comprises a third boom (16), hingedly connected to the first boom (14), for holding the load (18).

8. Method of repositioning a load (18) from a jack-up offshore platform (1) by a lifting crane (10) having a first boom (14) movably supported by the jack-up offshore platform (1) at its lower end and provided with counterbalancing means (24, 26, 29, 30) for counterbalancing the weight of the load (18) lifted by the first boom (14) and provide the first boom (14) in moment equilibrium, the counterbalancing means (24, 26, 29, 30) comprising at least one counterbalancing cable (24), the connection of which to the jack-up offshore platform (1) is movable relative to the jack-up offshore platform (1), and comprises first connection means provided on the counterbalancing cable (24), and second connection means provided on the jack-up offshore platform (1), wherein the second connection means comprise a guide fixed to the platform (1), the lifting crane (10) further comprising a second boom (15), provided to keep the counterbalancing cable (24) at a distance from the first boom (14), the method comprising:
- connecting the counterbalancing cable (24) to the guide fixed to the platform (1);
- lifting the load (18) whereby the counterbalancing cable (24) counterbalances the load (18) and provides the first boom (14) in moment equilibrium,
- positioning the load (18) such that the counterbalancing cable (24) is essentially unloaded;
- repositioning the load (18) such that the lifting crane (10) remains in equilibrium;
- when moving the lifting crane, moving the counterbalancing cable (24), relative to the platform (1), in the guide fixed to the jack-up offshore platform (1). and
- unloading the load (18).

9. Use of a jack-up offshore platform according to any one of claims 1 - 7 for assembling and servicing a structure at sea.

10. Use according to claim 9, wherein the counterbalancing cable (24) is connected to and disconnected from the guide fixed to the platform (1).

## Patentansprüche

1. Hub-Offshore-Plattform (1) mit einem Hebekran (10), der einen ersten Ausleger (14) aufweist, welcher von der Hub-Offshore-Plattform (1) an seinem unteren Ende beweglich getragen wird, um eine Last (18) anzuheben, wobei der Hebekran (10) Ausgleichsmittel (24, 26, 29, 30) zum Ausgleichen des Gewichts der von dem ersten Ausleger (14) des Hebekrans (10) zu hebenden Last (18) und zum Bereitstellen des ersten Auslegers (14) im momentanen Gleichgewicht aufweist, wobei die Ausgleichsmittel (24, 26, 29, 30) mindestens ein Ausgleichsseil (24) aufweisen, das an dem Hebekran (10) angebracht und mit der Plattform (1) verbunden ist, der Hebekran (10) ferner einen zweiten Ausleger (15) aufweist, der vorgesehen ist, um das Ausgleichsseil (24) in einem Abstand von dem ersten Ausleger (14) zu halten, wobei die Verbindung des Ausgleichsseils (24) mit der Hub-Offshore-Plattform (1) relativ zu der Hub-Offshore-Plattform (1) beweglich ist und erste Verbindungsmittel, die an dem Ausgleichsseil (24) vorgesehen sind, und zweite Verbindungsmittel, die an der Hub-Offshore-Plattform (1) vorgesehen sind, aufweist, wobei die zweiten Verbindungsmittel eine an der Plattform (1) befestigte Führung aufweisen.

2. Hub-Offshore-Plattform nach Anspruch 1, wobei die bewegliche Verbindung des Ausgleichsseils (24) mit der Plattform (1) die Führung umfasst, die am Arbeitsdeck (5) der Plattform befestigt ist und mit dem ersten Verbindungsmittel, das am Seil vorgesehen ist, verschiebbar zusammenwirken kann.

3. Hub-Offshore-Plattform nach Anspruch 2, wobei die Führung eine bogenförmige Stangenführung umfasst.

4. Hub-Offshore-Plattform nach einem der vorherigen Ansprüche, **dadurch gekennzeichnet, dass** der Hebekran (10) zusätzlich zu dem Ausgleichsseil (24) ein Gegengewicht (32) umfasst, das von dem Hebekran (10) getragen wird.

5. Hub-Offshore-Plattform nach einem der vorherigen Ansprüche, **dadurch gekennzeichnet, dass** der Hebekran (10) mindestens einen Sensor zum Erfassen von Kräften und Steuermittel zum Ausgleichen der Last durch Drehen des ersten Auslegers (14) aufweist, so dass der Hebekran (10), auf der Grundlage des Ergebnisses der erfassten Kräfte, im Gleichgewicht bleibt.

6. Hub-Offshore-Plattform nach einem der vorherigen Ansprüche, **dadurch gekennzeichnet, dass** der Hebekran (10) zum Heben von Lasten auf eine Höhe zwischen 50 und 150 Metern, vorzugsweise zwischen 60 und 130 Metern, am bevorzugtesten aber zwischen 70 und 110 Metern über der Hub-Offshore-Plattform (1) geeignet ist.

7. Hub-Offshore-Plattform nach einem der vorherigen Ansprüche, **dadurch gekennzeichnet, dass** der Hebekran (10) einen dritten Ausleger (16) aufweist, der mit dem ersten Ausleger (14) gelenkig verbunden ist, um die Last (18) zu halten.

8. Verfahren zum Umsetzen einer Last (18) von einer Hub-Offshore-Plattform (1) durch einen Hebekran (10) mit einem ersten Ausleger (14), der an seinem unteren Ende von der Hub-Offshore-Plattform (1) beweglich getragen wird und mit Ausgleichsmitteln (24, 26, 29, 30) versehen ist, um das Gewicht der von dem ersten Ausleger (14) angehobenen Last (18) auszugleichen und den ersten Ausleger (14) in momentanes Gleichgewicht zu bringen, wobei die Ausgleichsmittel (24, 26, 29, 30) mindestens ein Ausgleichsseil (24) aufweisen, dessen Verbindung mit der Hub-Offshore-Plattform (1) relativ zu der Hub-Offshore-Plattform (1) beweglich ist, und erste Verbindungsmittel, die an dem Ausgleichsseil (24) vorgesehen sind, und zweite Verbindungsmittel, die an der Hub-Offshore-Plattform (1) vorgesehen sind, umfasst, wobei die zweiten Verbindungsmittel eine an der Plattform (1) befestigte Führung aufweisen, wobei der Hebekran (10) ferner einen zweiten Ausleger (15) aufweist, der vorgesehen ist, um das Ausgleichsseil (24) in einem Abstand von dem ersten Ausleger (14) zu halten, wobei das Verfahren folgende Schritte aufweist:
- Verbinden des Ausgleichsseils (24) mit der an der Plattform (1) befestigten Führung;
- Anheben der Last (18), wobei das Ausgleichsseil (24) die Last (18) ausbalanciert und den ersten Ausleger (14) im momentanen Gleichgewicht hält;
- Positionieren der Last (18) so, dass das Ausgleichsseil (24) im Wesentlichen unbelastet ist;
- Neupositionieren der Last (18), so dass der Hebekran (10) im Gleichgewicht bleibt;
- beim Bewegen des Hebekrans, Bewegen des Ausgleichsseils (24), relativ zur Plattform (1), in der an der Hub-Offshore-Plattform (1) befestigten Führung;
und
- Abladen der Last (18).

9. Einsatz einer Hub-Offshore-Plattform nach einem der Ansprüche 1 bis 7 zur Montage und Wartung einer Anlage auf See.

10. Einsatz nach Anspruch 9, wobei das Ausgleichsseil (24) mit der an der Plattform (1) befestigten Führung verbunden und von dieser getrennt ist.

## Revendications

1. Plate-forme élévatrice maritime (1), comprenant une grue de levage (10) comportant une première flèche (14) supportée de manière à pouvoir se déplacer par la plate-forme élévatrice maritime (1) au niveau de son extrémité inférieure afin de soulever une charge (18), laquelle grue de levage (10) comprend des moyens d'équilibrage (24, 26, 29, 30) destinés à équilibrer le poids de la charge (18) à soulever par la première flèche (14) de la grue de levage (10) et à assurer à la première flèche (14) un moment d'équilibrage, les moyens d'équilibrage (24, 26, 29, 30) comprenant au moins un câble d'équilibrage (24) fixé sur la grue de levage (10) et relié à la plate-forme (1), la grue de levage (10) comprenant, en outre, une deuxième flèche (15), agencée de manière à maintenir le câble d'équilibrage (24) à une certaine distance de la première flèche (14),
dans laquelle la liaison du câble d'équilibrage (24) à la plate-forme élévatrice maritime (1) peut être déplacée par rapport à la plate-forme élévatrice maritime (1) et comprend des premiers moyens de liaison agencés sur le câble d'équilibrage (24) et des seconds moyens de liaison agencés sur la plate-forme élévatrice maritime (1), dans laquelle les seconds moyens de liaison comprennent un guide fixé sur la plate-forme (1).

2. Plate-forme élévatrice maritime selon la revendication 1, dans laquelle la liaison mobile du câble d'équilibrage (24) à la plate-forme (1) comprend le guide fixé sur le pont de travail de plate-forme (5) et adapté afin de coopérer de façon coulissante avec les premiers moyens de liaison agencés sur le câble.

3. Plate-forme élévatrice maritime selon la revendication 2, dans laquelle le guide comprend un guide en barre incurvée.

4. Plate-forme élévatrice maritime selon l'une quelconque des revendications précédentes,
**caractérisée en ce que** la grue de levage (10), en plus du câble d'équilibrage (24), comprend un contrepoids (32) supporté par la grue de levage (10).

5. Plate-forme élévatrice maritime selon l'une quelconque des revendications précédentes,
**caractérisée en ce que** la grue de levage (10) comprend au moins un capteur afin de détecter des efforts et des moyens de commande afin d'équilibrer la charge en faisant tourner la première flèche (14) de telle sorte que la grue de levage (10) reste en équilibre sur la base du résultat des efforts détectés.

6. Plate-forme élévatrice maritime selon l'une quelconque des revendications précédentes,
**caractérisée en ce que** la grue de levage (10) est adaptée au levage de charges à une hauteur comprise entre 50 et 150 mètres, de préférence, entre 60 et 130 mètres et plus préférablement entre 70 et 110 mètres au-dessus de la plate-forme élévatrice maritime (1).

7. Plate-forme élévatrice maritime selon l'une quelconque des revendications précédentes,
**caractérisée en ce que** la grue de levage (10) comprend une troisième flèche (16), reliée de manière articulée à la première flèche (14), afin de maintenir la charge (18).

8. Procédé de repositionnement d'une charge (18) à partir d'une plate-forme élévatrice maritime (1) par une grue de levage (10) comportant une première flèche (14) supportée de manière à pouvoir se déplacer par la plate-forme élévatrice maritime (1) à son extrémité inférieure et comportant des moyens d'équilibrage (24, 26, 29, 30) destinés à équilibrer le poids de la charge (18) soulevée par la première flèche (14) et à assurer à la première flèche (14) un moment d'équilibrage, les moyens d'équilibrage (24, 26, 29, 30) comprenant au moins un câble d'équilibrage (24), dont la liaison à la plate-forme élévatrice maritime (1) peut être déplacée par rapport à la plate-forme élévatrice maritime (1), et comprend des premiers moyens de liaison agencés sur le câble d'équilibrage (24) et des seconds moyens de liaison agencés sur la plate-forme élévatrice maritime (1), dans lequel les seconds moyens de liaison comprennent un guide fixé sur la plate-forme (1), la grue de levage (10) comprenant, en outre, une deuxième flèche (15), agencée de manière à maintenir le câble d'équilibrage (24) à une certaine distance de la première flèche (14), le procédé comprenant :
la liaison du câble d'équilibrage (24) au guide fixé sur la plate-forme (1) ;
le levage de la charge (18) de telle sorte que le câble d'équilibrage (24) équilibre la charge (18) et assure à la première flèche (14) un moment d'équilibrage,
le positionnement de la charge (18) de telle sorte que le câble d'équilibrage (24) soit sensiblement déchargé ;
le repositionnement de la charge (18) de telle sorte que la grue de levage (10) reste en équilibre ;
lors du déplacement de la grue de levage, le déplacement du câble d'équilibrage (24) par rapport à la plate-forme (1) sur le guide fixé sur la plate-forme élévatrice maritime (1), et
le déchargement de la charge (18).

9. Utilisation d'une plate-forme élévatrice maritime selon l'une quelconque des revendications 1 à 7 afin d'assembler et d'entretenir une structure en mer.

10. Utilisation selon la revendication 9, dans laquelle le câble d'équilibrage (24) est couplé au guide fixé sur la plate-forme (1) et découplé de celui-ci.
